# EUROPEAN PATENT APPLICATION

(11) **EP 4 557 470 A1**
(43) Date of publication of application: **21.05.2025**
(21) Application number: 24759771.9
(22) Date of filing: 23.02.2024
(51) Int. Cl.: H01M 50/152

(54) **BATTERY SHELL AND BATTERY**

(30) Priority: 23.02.2023 CN 202320301087 U
(71) Applicant: SVOLT Energy Technology Co., Ltd., Changzhou, Jiangsu 213200 (CN)
(72) Inventor: YUAN, Yue, hangzhou, Jiangsu 213200 (CN); XIA, Tianjun, hangzhou, Jiangsu 213200 (CN); GONG, Weihong, hangzhou, Jiangsu 213200 (CN)
(74) Representative: M. Zardi & Co S.A.
(86) International application number: PCT/CN2024/078333
(87) International publication number: WO 2024/175097

(57) **Abstract**

A battery shell (10) and a battery (100). The battery shell (10) comprises: a housing (1), two ends in an axial direction of the housing (1) being open; and a positive cover plate (2) and a negative cover plate (3), the positive cover plate (2) and the negative cover plate (3) respectively being connected to the two ends in the axial direction of the housing (1) so as to respectively block two openings of the housing (1), a filling port (31) being formed in one of the positive cover plate (2) and the negative cover plate (3), and the other one thereof being an explosion-proof plate and being provided with an explosion-proof groove (21) formed on an outer surface thereof.

## Description

### CROSS REFERENCE TO RELATED APPLICATIONS

The present application is proposed based on the Chinese patent application with an application number of 202320301087.0 and filed on Feb. 23, 2023 and claims the priority of the Chinese patent application, the contents of which are incorporated herein by reference in its entirety.

### TECHNICAL FIELD

The present application relates to the technical field of batteries, in particular to a battery shell and a battery.

### BACKGROUND

With continuous development of technology, requirements of users on new energy batteries are getting higher and higher. In order to improve the safety performance of a battery cell, the battery cell is usually provided with a pressure relief mechanism, when gas is generated inside the battery cell during abnormal operation of the battery cell, gas can be discharged through the pressure relief mechanism, so as to avoid large safety accidents. At present, when batteries are assembled, the electrolyte may corrode the pressure relief structure during liquid injection, which seriously affects the performance of the battery.

### SUMMARY OF THE APPLICATION

The present application aims at solving at least one of the technical problems in the prior art. To this end, the present application provides a battery shell, and the battery shell keeps the explosion-proof groove structurally stable and reduces the influence on the performance of the battery.

The present application further provides a battery including the above battery shell.

A battery shell according to embodiments of the present application includes: a housing, two ends in an axial direction of the housing being open; a positive cover plate and a negative cover plate, respectively being connected to the two ends in the axial direction of the housing so as to respectively block two openings of the housing, a filling port being formed in one of the positive cover plate and the negative cover plate, and the other of the positive cover plate and the negative cover plate being an explosion-proof plate and being provided with an explosion-proof groove on an outer surface thereof.

According to the battery shell of the embodiments of the present application, by separately arranging the explosion-proof groove and the filling port on the positive cover plate and the negative cover plate, the explosion-proof groove is separated from the filling port, thereby preventing such problems as rustiness and corrosion to the explosion-proof groove when the electrolyte flows into the explosion-proof groove during injection into the battery, keeping the explosion-proof groove structurally stable, and reducing the influence on the performance of the battery.

In some embodiments of the present application, the filling port is formed on the negative cover plate, the positive cover plate is an explosion-proof plate and the explosion-proof groove is formed on the positive cover plate.

In some embodiments of the present application, the explosion-proof plate is provided with a convex rib protruding towards the outer side of the battery shell, and the explosion-proof groove is formed on a free end face of the convex rib.

In some embodiments of the present application, the free end face of the convex rib is further provided with a liquid guide groove, the liquid guide groove is located on a side, facing away from the center of the explosion-proof plate, of the explosion-proof groove, one end of the liquid guide groove is communicated with the explosion-proof groove, and the other end of the liquid guide groove extends to an end of the convex rib facing away from the center of the explosion-proof plate in a direction away from the center of the explosion-proof plate.

In some embodiments of the present application, a plurality of liquid guide grooves are spaced apart along a length direction of the explosion-proof groove.

In some embodiments of the present application, a bottom wall of the liquid guide groove is flush with the lowest point of the explosion-proof groove.

In some embodiments of the present application, the width of the explosion-proof groove gradually increases in a direction from a bottom wall of the explosion-proof groove to an opening of the explosion-proof groove.

In some embodiments of the present application, the explosion-proof groove extends in a circumferential direction of the explosion-proof plate.

In some embodiments of the present application, the housing is cylindrical, the positive cover plate is riveted to the housing, and the negative cover plate is welded to the housing.

The battery according to embodiments of the present application includes the above battery shell.

According to the battery of the embodiments of the present application, by arranging the above battery shell, and by separately arranging the explosion-proof groove and the filling port on the positive cover plate and the negative cover plate on the above battery shell, the explosion-proof groove is separated from the filling port, thereby preventing such problems as rustiness and corrosion to the explosion-proof groove when the electrolyte flows into the explosion-proof groove during injection into the battery, keeping the explosion-proof groove structurally stable, and reducing the influence on the performance of the battery.

Additional aspects and advantages of the present application will be partially described below, and will partially become apparent from the following description, or will be learned from practice of the present application.

### BRIEF DESCRIPTION OF THE DRAWINGS

The above and/or additional aspects and advantages of the present application will become apparent and readily understood from the description of the embodiments in combination with the following accompanying drawings, and in the drawings:
Fig. 1 is a schematic diagram of a battery according to an embodiment of the present application;
Fig. 2 is a top view of a battery according to an embodiment of the present application;
Fig. 3 is a sectional view of a battery according to an embodiment of the present application;
Fig. 4 is an enlarged view of A in Fig. 3.

### Reference numerals:

100. battery;
10. battery shell;
1. housing; 11. opening;
2. positive cover plate; 21. explosion-proof groove; 22. convex rib; 23. liquid guide groove;
3. negative cover plate; 31. filling port.

### DETAILED DESCRIPTION

Embodiments of the present application are described in detail below, and examples of the embodiments are shown in the accompanying drawings, wherein the same or similar reference numerals throughout denote the same or similar elements or elements having the same or similar functions. The embodiments described below with reference to the accompanying drawings are exemplary and are merely used for explaining the present application, rather than being construed as a limitation of the present application.

It should be understood that, in the description of the present application, the orientation or positional relationship indicated by such terms as "center", "longitudinal", "transverse", "length", "width", "thickness", "up", "down", "front", "rear", "left", "right", "vertical", "horizontal", "top", "bottom", "inner", "outer", "clockwise", "counterclockwise", "axial", "radial" and "circumferential" is the orientation or positional relationship based on the accompanying drawings. Such terms are merely for the convenience of description of the present application and simplified description, rather than indicating or implying that the device or element referred to must be located in a certain orientation, or must be constructed or operated in a certain orientation, and therefore the terms cannot be construed as a limitation of the present application. In addition, features defined as "first" and "second" may explicitly or implicitly include one or more such features. In the description of the present application, "a plurality of" means two or more unless otherwise stated.

In the description of the present application, it should be noted that, unless otherwise expressly specified and limited, the terms "mounted", "connected", "connection" should be understood in their broad sense, for example, the connection may be a fixed connection, a detachable connection, or an integral connection; can be mechanical connection or electrical connection; and can be direct connection or can be indirect connection through an intermediate, and it may be a connection within two elements. For those skilled in the art, the specific meaning of the above terms in the context of the present application can be understood according to specific conditions.

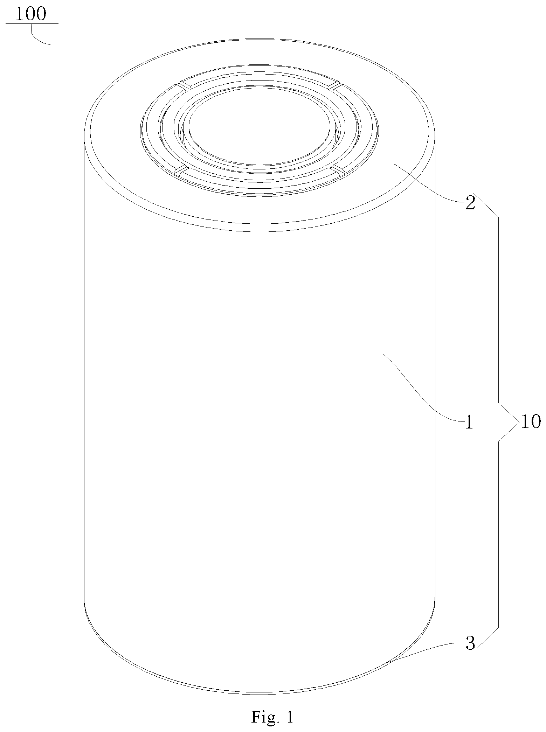

The battery housing 1 according to the embodiment of the present application is described below with reference to Figs. 1 to 4.

As shown in Fig. 1, the battery shell 1 according to the embodiment of the present application includes a housing 1, a positive cover plate 2 and a negative cover plate 3.

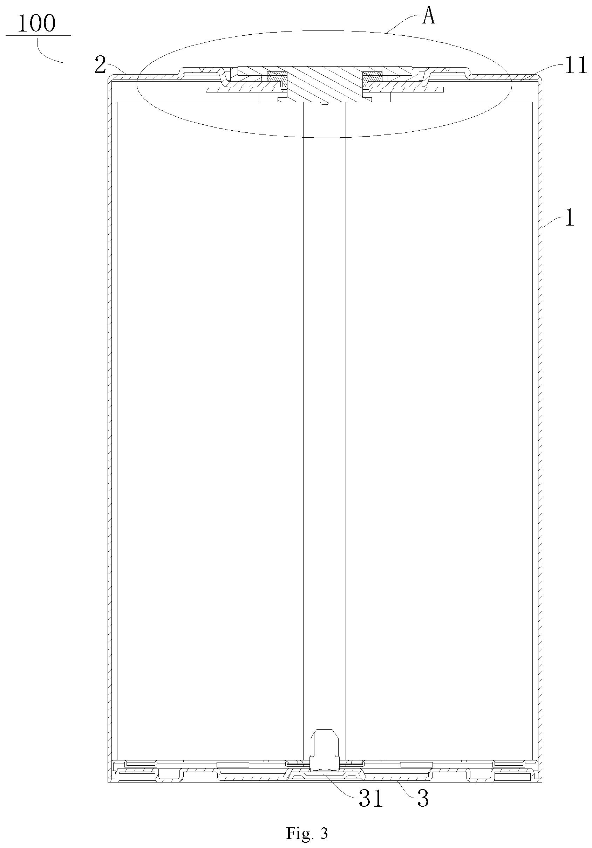

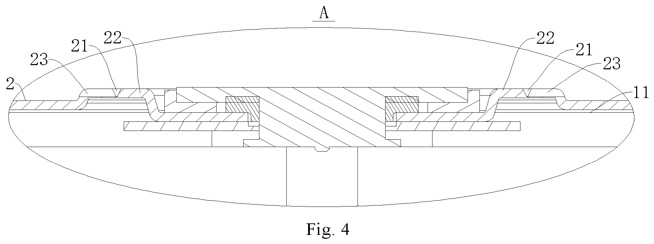

Specifically, with reference to Figs. 3 and 4, the housing 1 has two open ends in the axial direction, and the housing 1 is configured to protect the internal structure of the battery 100. A positive cover plate 2 and a negative cover plate 3 are respectively connected to the two ends in the axial direction of the housing 1 so as to respectively block two openings 11 of the housing 1, one of the positive cover plate 2 and the negative cover plate 3 is provided with a filling port 31, the filling port 31 is configured to inject electrolyte into the battery 100 during assembly of the battery 100, and the other one of the positive cover plate 2 and the negative cover plate 3 is an explosion-proof plate and is provided with an explosion-proof groove 21 on the outer surface.

It should be understood that, since the thickness of the explosion-proof plate at the explosion-proof groove 21 is relatively small compared to the thickness of other parts on the explosion-proof plate, when air pressure inside the battery 100 rises due to an abnormal situation such as heat exposure inside the battery 100, the gas can break through the bottom wall of the explosion-proof groove 21, so as to play a role in relieving pressure.

Further, when the battery 100 is assembled, the explosion-proof groove 21 and the filling port 31 are respectively formed on the positive cover plate 2 and the negative cover plate 3, then the explosion-proof groove 21 is separated from the filling port 31, thereby preventing such problems as rustiness and corrosion to the explosion-proof groove 21 when the electrolyte flows into the explosion-proof groove 21 during injection into the battery 100, keeping the explosion-proof groove 21 structurally stable, and reducing the influence on the performance of the battery 100.

According to the battery shell 1 of the embodiment of the present application, by separately arranging the explosion-proof groove 21 and the filling port 31 on the positive cover plate 2 and the negative cover plate 3, the explosion-proof groove 21 is separated from the filling port 31, thereby preventing such problems as rustiness and corrosion to the explosion-proof groove 21 when the electrolyte flows into the explosion-proof groove 21 during injection into the battery 100, keeping the explosion-proof groove 21 structurally stable, and reducing the influence on the performance of the battery 100.

**In** some embodiments of the present application, as shown in Figs. 1 and 3, the filling port 31 is arranged on the negative cover plate 3, the positive cover plate 2 is an explosion-proof plate and the explosion-proof groove 21 is formed on the positive cover plate 2. It can be understood that, since the positive cover plate 2 has important structures such as a terminal post, the filling port 31 is arranged on the negative cover plate 3, such that the important structures such as the terminal post are not affected. The explosion-proof groove 21 is formed on the positive cover plate 2 and can be separated from the filling port 31, so as to reduce such problems as rustiness and corrosion to the explosion-proof groove 21, and keep the explosion-proof groove 21 more structurally stable.

In some embodiments of the present application, as shown in Fig. 4, the explosion-proof plate (e.g., a positive cover plate 2) is provided with a convex rib 22 protruding towards the outer side of the battery shell 1, and the explosion-proof groove 21 is formed on a free end face of the convex rib 22. It can be understood that the filling port 31 and the explosion-proof groove 21 are not on the same cover plate, but during the assembly of the battery 100, the electrolyte cannot be prevented from splashing and remaining in the explosion-proof groove 21, and the explosion-proof groove 21 is arranged on the free end face of the convex rib 22, and the convex rib 22 can block the splashing electrolyte from entering the explosion-proof groove 21, thereby further reducing such problems as rustiness and corrosion to the explosion-proof groove 21, and keeping the explosion-proof groove 21 more structurally stable.

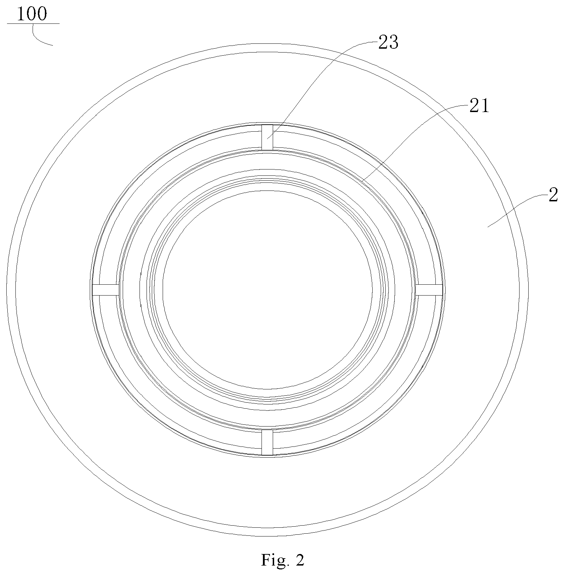

In some embodiments of the present application, as shown in Fig. 2, the free end face of the convex rib 22 is further provided with a liquid guide groove 23, the liquid guide groove 23 is located on a side, facing away from the center of the explosion-proof plate (e.g., the positive cover plate 2), of the explosion-proof groove 21, one end of the liquid guide groove 23 is communicated with the explosion-proof groove 21, and the other end of the liquid guide groove 23 extends to an end of the convex rib 22 facing away from the center of the explosion-proof plate (e.g., the positive cover plate 2) in a direction away from the center of the explosion-proof plate (e.g., the positive cover plate 2). Therefore, the electrolyte remaining in the explosion-proof groove 21 can flow out of the explosion-proof groove 21 along the liquid guide groove 23, thereby reducing the electrolyte remaining in the explosion-proof groove 21, further reducing such problems as rustiness and corrosion to the explosion-proof groove 21, and keeping the explosion-proof groove 21 more structurally stable.

In some embodiments of the present application, as shown in Fig. 2, a plurality of liquid guide grooves 23 are spaced apart along a length direction of the explosion-proof groove 21. Therefore, the remaining electrolyte can flow out from multiple positions of the explosion-proof groove 21, thereby further reducing the electrolyte remaining in the explosion-proof groove 21, further reducing such problems as rustiness and corrosion to the explosion-proof groove 21, and keeping the explosion-proof groove 21 more structurally stable.

In the example shown in Fig. 2, four liquid guide grooves 23 are available and are spaced apart uniformly along a length direction of the explosion-proof groove 21, but the present application is not limited hereto, and the number of the liquid guide grooves 23 may be more, such as 5, 6, 7 or 8.

In some embodiments of the present application, as shown in Fig. 4, a bottom wall of the liquid guide groove 23 is flush with the lowest point of the explosion-proof groove 21. Therefore, the remaining electrolyte can better flow from the explosion-proof groove 21 to the liquid guide groove 23 and can better flow out of the liquid guide groove 23, thereby further reducing such problems as rustiness and corrosion to the explosion-proof groove 21, and keeping the explosion-proof groove 21 more structurally stable.

In some embodiments of the present application, as shown in Fig. 4, the width of the explosion-proof groove 21 gradually increases in a direction from a bottom wall of the explosion-proof groove 21 to an opening 11 of the explosion-proof groove 21. Therefore, the area at the bottom wall of the explosion-proof groove 21 is the minimum, air pressure at the bottom wall of the explosion-proof groove 21 is increased, and the probability of the gas breaking through the bottom wall of the explosion-proof groove 21 is increased. In addition, when gas breaks through the bottom wall of the explosion-proof groove 21, in a direction from the bottom wall of the explosion-proof groove 21 to the opening 11 of the explosion-proof groove 21, the width of the explosion-proof groove 21 gradually increases, such that gas flows smoothly, the efficiency of pressure relief is improved and safety of the battery 100 is enhanced.

In some embodiments of the present application, as shown in Fig. 2, the explosion-proof groove 21 extends in a circumferential direction of the explosion-proof plate (e.g., the positive cover plate 2). Therefore, pressure relief of the battery 100 in the circumferential direction is made uniform, and the pressure relief area is also increased, thereby reducing the occurrence of explosions due to over-concentration of pressure during pressure relief, and enhancing the safety of the battery 100. For example, in the example shown in Fig. 2, the explosion-proof groove 21 extends in an annular shape in the circumferential direction along the explosion-proof plate (e.g., the positive cover plate 2).

In some embodiments of the present application, as shown in Fig. 1, the housing 1 is cylindrical, and it can be understood that the battery shell 1 is cylindrical, and the battery 100 is a cylindrical battery. The positive cover plate 2 is riveted to the housing 1, and the negative cover plate 3 is welded to the housing 1. Therefore, the positive cover plate 2 and the negative cover plate 3 are firmly connected to the housing 1, thereby enhancing reliability of blocking the opening 11.

A battery 100 according to the embodiments of the present application is described below with reference to Fig. 1.

As shown in Fig. 1, a battery 100 according to the embodiment of the present application includes the above battery shell 1.

According to the battery 100 of the embodiment of the present application, by arranging the above battery shell 1, and by separately arranging the explosion-proof groove 21 and the filling port 31 on the positive cover plate 2 and the negative cover plate 3 on the above battery shell 1, the explosion-proof groove 21 is separated from the filling port 31, thereby preventing such problems as rustiness and corrosion to the explosion-proof groove 21 when the electrolyte flows into the explosion-proof groove 21 during injection into the battery 100, keeping the explosion-proof groove 21 structurally stable, and reducing the influence on the performance of the battery 100.

In the description of the present specification, the description with reference to the terms "an embodiment", "some embodiments", "exemplary embodiments", "examples", "specific examples", or "some examples" means that the specific features, structures, materials or characteristics described in combination with the embodiment or example are included in at least one embodiment or example of the present application. In the present specification, schematic expressions of the above terms do not necessarily refer to the same embodiment or example. Moreover, the specific features, structures, materials or characteristics described may be combined in any one or more embodiments or examples in a suitable manner.

Although embodiments of the present application have been shown and described, it can be understood by those skilled in the art that various changes, modifications, substitutions and variations can be made to these embodiments without departing from the principles and purposes of the present application, and that the scope of the present application is limited by the claims and their equivalents.

## Claims

1. A battery shell, comprising:
a housing, two ends in an axial direction of the housing being open; and
a positive cover plate and a negative cover plate, respectively being connected to the two ends in the axial direction of the housing so as to respectively block two openings of the housing, a filling port being formed in one of the positive cover plate and the negative cover plate, and the other of the positive cover plate and the negative cover plate being an explosion-proof plate and being provided with an explosion-proof groove on an outer surface thereof.

2. The battery shell according to claim 1, wherein the filling port is formed on the negative cover plate, the positive cover plate is an explosion-proof plate, and the explosion-proof groove is formed on the positive cover plate.

3. The battery shell according to claim 1, wherein the explosion-proof plate is provided with a convex rib protruding towards the outer side of the battery shell, and the explosion-proof groove is formed on a free end face of the convex rib.

4. The battery shell according to claim 3, wherein the free end face of the convex rib is further provided with a liquid guide groove, the liquid guide groove is located on a side, facing away from the center of the explosion-proof plate, of the explosion-proof groove, one end of the liquid guide groove is communicated with the explosion-proof groove, and the other end of the liquid guide groove extends to an end of the convex rib facing away from the center of the explosion-proof plate in a direction away from the center of the explosion-proof plate.

5. The battery shell according to claim 4, wherein a plurality of liquid guide grooves are spaced apart along a length direction of the explosion-proof groove.

6. The battery shell according to claim 4, wherein a bottom wall of the liquid guide groove is flush with the lowest point of the explosion-proof groove.

7. The battery shell according to any one of claims 1 to 6, wherein the width of the explosion-proof groove gradually increases in a direction from a bottom wall of the explosion-proof groove to an opening of the explosion-proof groove.

8. The battery shell according to any one of claims 1 to 7, wherein the explosion-proof groove extends in a circumferential direction of the explosion-proof plate.

9. The battery shell according to any one of claims 1 to 8, wherein the housing is cylindrical, the positive cover plate is riveted to the housing, and the negative cover plate is welded to the housing.

10. A battery, comprising the battery shell according to any one of claims 1 to 9.
